# EUROPEAN PATENT SPECIFICATION

(11) **EP 3 530 979 B1**
(45) Date of publication and mention of the grant of the patent: **19.04.2023**
(21) Application number: 17875053.5
(22) Date of filing: 22.09.2017
(51) Int. Cl.: F16F 9/14, F16F 9/50

(54) **ROTARY DAMPER**
DREHDÄMPFER
AMORTISSEUR ROTATIF

(30) Priority: 24.11.2016 JP 2016227616
(43) Date of publication of application: 28.08.2019
(73) Proprietor: Somic Management Holdings Inc., Sumida-ku Tokyo 130-0004 (JP)
(72) Inventor: NAKAYA, Kazumasa, Hamamatsu-shi, Shizuoka 431-2103 (JP)
(74) Representative: Zimmermann, Tankred Klaus
(86) International application number: PCT/JP2017/034245
(87) International publication number: WO 2018/096774

(56) References cited:
- EP-A1- 2 824 358
- JP-A- H04 327 036
- JP-A- H11 311 285
- JP-A- H11 311 285
- JP-A- 2013 181 641
- US-A- 2 037 819

## Description

### TECHNICAL FIELD

The present invention relates to a rotary damper used as a kinetic energy damping device in a rotation mechanism of a four-wheeled or two-wheeled self-propelled vehicle or an industrial machine tool.

### BACKGROUND ART

The rotary damper has been conventionally used as the kinetic energy damping device in the rotation mechanism of the four-wheeled or two-wheeled self-propelled vehicle or the industrial machine tool. For example, JP 11-82593 A discloses the rotary damper including two damping force generating elements having different damping characteristics. A damping force of the rotary damper is different between at the time of forward rotation and at the time of reverse rotation of a rotor.

However, the rotary damper disclosed in JP 11-82593 A includes two damping force generating elements in order to make the damping force different between a forward damping force and a reverse damping force of the rotor. Therefore, there is a problem that a device structure is large, complicated and heavy.

US 2 037 819 A, which is considered the closest prior art, describes a hydraulic shock absorber comprising a housing forming a cylindrical wall for the hydraulic fluid space, end walls for said housing forming sides of the space, partition lugs extending from the housing into the space, a piston hub within the space concentric therewith and bearing against the inner faces of the lugs, shaft ends extending from the piston hub and journaled in the end walls and projecting beyond the walls for connection with a lever structure, vanes on the piston hub for displacing the fluid between the partition lugs, means controlling the flow of fluid from one side of the vanes to the other during oscillation of the piston hub, means connecting a reservoir with the space in which the piston vanes operate, the reservoir end wall having a circumferential groove surrounding the shaft end journaled therein, and means connecting the groove with the reservoir, the other end wall having a circumferential groove around the shaft end journaled therein, a, passage through the end wall communicating with the groove and means forming a duct through one of the partition lugs, the duct communicating at one end with the passage, and at its other end. with the reservoir.

### SUMMARY OF THE INVENTION

An object of the present invention is to provide a rotary damper which can have a miniaturized, simplified, and lightweight device structure.

This object is achieved by a rotary damper according to claim 1.

In order to achieve the above object, the present invention features a rotary damper including: a housing having a cylindrical inner chamber containing a fluid in a liquid-tight manner and fixed vanes formed in a wall shape in a radial direction in the inner chamber to prevent circumferential flow of the fluid; a rotor having movable vanes rotating while dividing the inner chamber and pushing the fluid, on an outer peripheral portion of a shaft body thereof; at least four individual chambers formed by the fixed vanes and the movable vanes in the inner chamber and having a volume increased or decreased depending on a rotational direction of the movable vanes; a first two-way communication channel allowing the fluid to mutually flow between at least two of the individual chambers having the volume simultaneously decreased by rotation of the movable vanes to one direction and the volume simultaneously increased by the rotation of the movable vanes to the other direction; a first one-way communication channel allowing the fluid to flow only from one direction to the other direction between at least two of the individual chambers having the volume simultaneously increased by the rotation of the movable vanes to the one direction and the volume simultaneously decreased by the rotation of the movable vanes to the other direction; a second two-way communication channel allowing the fluid to flow from the one-side communicating individual chamber side to the communicating individual chamber side, and allowing the fluid to flow in a restricted manner from the communicating individual chamber side to the one-side communicating individual chamber side, between at least one of communicating individual chambers which are at least two individual chambers communicated through the first two-way communication channel and at least one of one-side communicating individual chambers which are at least two individual chambers communicated through the first one-way communication channel; and a second one-way communication channel allowing the fluid to flow in a restricted manner only from the one-side communicating individual chamber side to the communicating individual chamber side between at least one of the communicating individual chambers not communicated through the second two-way communication channel and at least one of the one-side communicating individual chambers not communicated through the second two-way communication channel.

In this case, allowing the fluid to flow in a restricted manner from the communicating individual chamber side to the one-side communicating individual chamber side of the second two-way communication channel means to generate pressure difference between the two by making it more difficult for the fluid to flow under the same conditions with respect to flowability of the fluid from the one-side communicating individual chamber side to the communicating individual chamber side of the previous stage. Further, allowing the fluid to flow in a restricted manner only from the one-side communicating individual chamber side to the communicating individual chamber side of the second one-way communication channel means to generate the pressure difference between the two by making it more difficult for the fluid to flow under the same conditions with respect to the flowability of the fluid from the one-side communicating individual chamber side to the communicating individual chamber side of the second two-way communication channel. In these cases, restriction of the flow of the fluid is realized by a size of a flow channel through which the fluid flows, a load preventing the flow, or the like.

According to a feature of the present invention having such a structure, in the rotary damper, a plurality of individual chambers constituting one inner chamber are communicated with the first two-way communication channel, the first one-way communication channel, the second two-way communication channel, and the second one-way communication channel, so that the number of individual chambers having an increasing pressure is different between at the time of rotation of the rotor in one direction and at the time of rotation of the rotor in the other direction. Therefore, it is possible to miniaturize, simplify, and reduce weight of the device structure of the rotary damper having different damping forces at the time of rotation of the rotor in one direction and at the time of rotation in the other direction.

Further, another feature of the present invention is that, in the rotary damper, each of the first two-way communication channel and the first one-way communication channel is formed in a shaft body of the rotor.

According to another feature of the present invention having such a structure, in the rotary damper, the first two-way communication channel and the first one-way communication channel are formed in the shaft body constituting the rotor. Therefore, it is possible to miniaturize, simplify, and reduce weight of the device structure.

Further, another feature of the present invention is that, in the rotary damper, each of the second two-way communication channel and the second one-way communication channel is formed in the movable vane of the rotor.

According to another feature of the present invention having such a structure, in the rotary damper, the second two-way communication channel and the second one-way communication channel is formed in the movable vane of the rotor. Therefore, it is possible to miniaturize, simplify, and reduce weight of the device structure.

Further, another feature of the present invention is that the rotary damper further includes an accumulator which communicates with the one-side communicating individual chamber communicating with the second two-way communication channel, and absorbs a volume change due to expansion or compression of the fluid.

According to another feature of the present invention having such a structure, in the rotary damper, the one-side communicating individual chamber communicating with the second two-way communication channel is in a non-high-pressure state constantly not having a higher pressure than other individual chambers regardless of a rotational direction of the rotor. Therefore, the rotary damper according to the present invention can accurately suppress the volume change of the fluid in a stable state by providing the accumulator which communicates with the one-side communicating individual chamber constantly in the non-high-pressure state, and absorbs the volume change due to expansion or compression of the fluid.

Further, another feature of the present invention is that the rotary damper further includes a bypass channel adjustably communicating a limited amount of the fluid between an individual chamber which is constantly not in a high-pressure state with respect to the other individual chambers regardless of the rotational direction of the movable vane among the at least four individual chambers formed in the inner chamber, and an individual chamber which can be in the high-pressure state by rotation of the movable vane with respect to the individual chamber which is constantly not in the high-pressure state.

According to another feature of the present invention having such a structure, the rotary damper further includes the bypass channel adjustably communicating the limited amount of the fluid between the individual chamber which is constantly not in the high-pressure state with respect to the other individual chambers regardless of the rotational direction of the movable vane among the at least four individual chambers formed in the inner chamber, and the individual chamber which can be in the high-pressure state by the rotation of the movable vane with respect to the individual chamber which is constantly not in the high-pressure state. Therefore, by adjusting a flow rate in the bypass channel, it is possible to adjust a pressure of the individual chamber which is in the high-pressure state by the rotation of the movable vane and increase or decrease the damping force of the rotary damper.

### BRIEF DESCRIPTION OF THE DRAWINGS

Fig. 1 is a perspective view schematically showing an entire structure of a rotary damper according to the present invention.
Fig. 2 is a front view schematically showing the entire structure of the rotary damper shown in Fig. 1.
Fig. 3 is a side view schematically showing the entire structure of the rotary damper shown in Fig. 1.
Fig. 4 is a cross-sectional view of the rotary damper taken along a line 4-4 shown in Fig. 2.
Fig. 5 is a cross-sectional view of the rotary damper taken along a line 5-5 shown in Fig. 2.
Fig. 6 is a cross-sectional view of the rotary damper taken along a line 6-6 shown in Fig. 3.
Fig. 7 is a cross-sectional view of the rotary damper taken along a line 7-7 shown in Fig. 3.
Fig. 8 is an explanatory view schematically showing Figs. 6 and 7 in order to explain an operating state of the rotary damper.
Fig. 9 is an explanatory view showing a state in which a rotor is rotated clockwise from a state shown in Fig. 8.
Fig 10 is an explanatory view showing a state in which the rotor is rotated to an opposite side from the state shown in Fig. 8.
Fig. 11 is an explanatory view showing a state in which the rotor is rotated counterclockwise from the state shown in Fig. 10.
Fig. 12 is a cross-sectional view corresponding to Fig. 6, showing an internal structure of the rotary damper according to a modification of the present invention.
Fig. 13 is a cross-sectional view corresponding to Fig. 7, showing the internal structure of the rotary damper according to the modification of the present invention.
Fig. 14 is a diagram schematically showing Figs. 12 and 13 in order to explain the operating state of the rotary damper. Further, Fig. 14 is an explanatory diagram showing a state in which the rotor is rotated clockwise.
Fig. 15 is a diagram schematically showing Figs. 12 and 13 in order to explain the operating state of the rotary damper. Further, Fig. 15 is an explanatory diagram showing a state in which the rotor is rotated counterclockwise.

### DESCRIPTION OF THE EMBODIMENTS

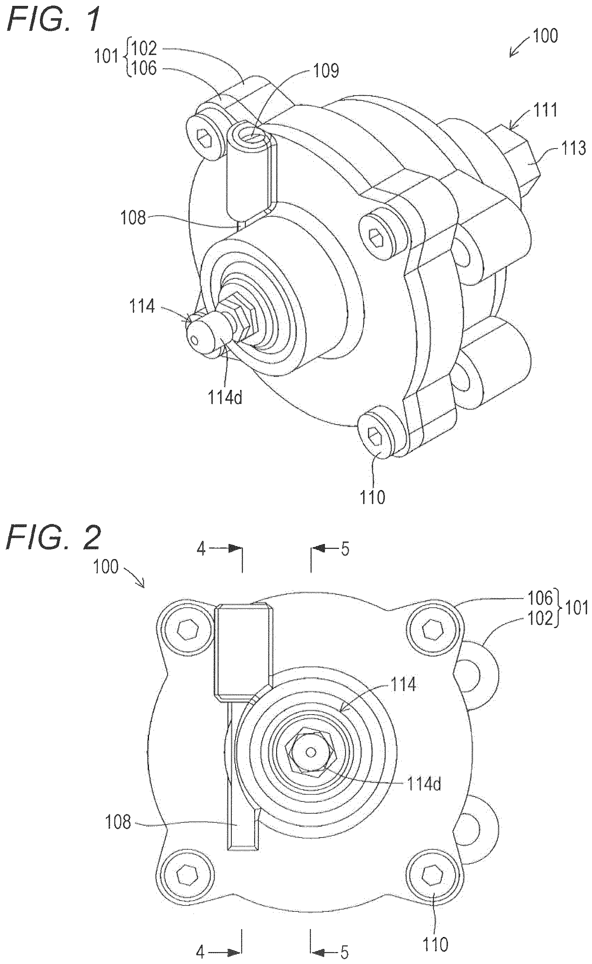

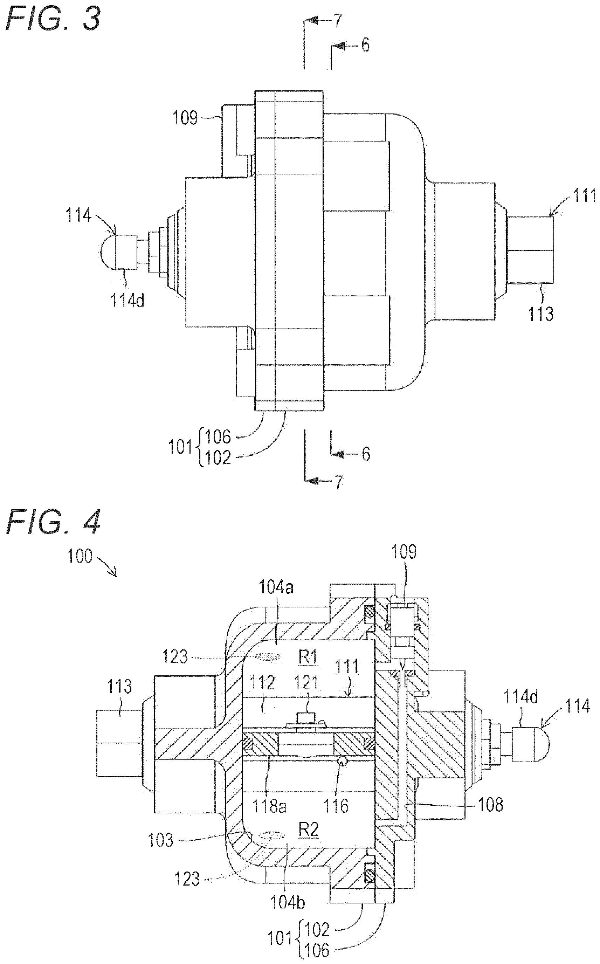

Hereinafter, an embodiment of the rotary damper according to the present invention will be described with reference to the drawings. Fig. 1 is a perspective view schematically showing an entire structure of a rotary damper 100 according to the present invention. Fig. 2 is a front view schematically showing the entire structure of the rotary damper 100 shown in Fig. 1. Fig. 3 is a side view schematically showing the entire structure of the rotary damper 100 shown in Fig. 1. Note that each drawing referred to in the present specification has a portion which is schematically displayed, such as some components are exaggerated for easy understanding of the present invention. Therefore, dimensions, proportions, and the like of the components may be different. The rotary damper 100 is attached to a base end of a swing arm, which supports a rear wheel of two-wheeled self-propelled vehicle (motorcycle) so that it can move up and down. The rotary damper 100 is a damping device for damping kinetic energy when the rear wheel moves up and down.

### (Structure of rotary damper 100)

The rotary damper 100 includes a housing 101. The housing 101 is a component, which rotatably holds a rotor 111 and constitutes a case of the rotary damper 100. The rotary damper 100 is made of an aluminum material, an iron material, or a zinc material. Specifically, the housing 101 mainly includes a housing body 102 and a lid body 106.

As shown in Figs. 4 to 7, the housing body 102 is a component which accommodates movable vanes 118a and 118b of the rotor 111, and a fluid 123 to be described below. At the same time, the housing body 102 is the component which rotatably supports one end of a shaft body 112 of the rotor 111. The housing body 102 is formed in a bottomed cylindrical shape having a large opening at one end of a cylinder and a small opening at the other end thereof. Inside the housing body 102, an inner chamber 103 including a space of two half cylinders facing each other is formed on the large opening side of the cylinder. At the same time, a rotor support portion 105 is formed from a bottom of the inner chamber 103 to the small opening side of the cylinder.

The inner chamber 103 is a space which contains the fluid 123 in a liquid-tight manner together with the movable vanes 118a and 118b of the rotor 111. In the inner chamber 103, fixed vanes 104a and 104b are integrally formed with the housing body 102. The fixed vanes 104a and 104b are wall-shaped portions for dividing the inner chamber 103 together with the rotor 111 to form individual chambers. The fixed vanes 104a and 104b are formed to protrude inwardly from an inner peripheral surface of the housing body 102 in an axial direction of the housing body 102. In the present embodiment, the fixed vanes 104a and 104b are provided at positions facing each other on a circumferential direction of the inner peripheral surface of the housing body 102. Further, a sealing material in close contact with an outer peripheral surface of the shaft body 112 of the rotor 111 is provided at each tip end of the fixed vanes 104a and 104b.

The rotor support portion 105 is a cylindrical portion which rotatably supports one end of the shaft body 112 of the rotor 111. The rotor support portion 105 supports the shaft body 112 of the rotor 111 in a liquid-tight manner via the sealing material such as packing.

The lid body 106 is a component for sealing the inner chamber 103 formed in the housing body 102 in a liquid-tight manner. One end of a rotor support portion 107 formed in a cylindrical shape is formed in a shape protruding like a flange. The rotor support portion 107 is a cylindrical portion which rotatably supports the other end of the shaft body 112 of the rotor 111. The rotor support portion 107 supports the shaft body 112 of the rotor 111 in a liquid-tight manner via the sealing material such as packing.

Further, the lid body 106 is formed with a bypass channel 108 provided with an adjusting needle 109. By dividing the inner chamber 103 into four by the movable vanes 118a and 118b, a first individual chamber R1, a second individual chamber R2, a third individual chamber R3 and a fourth individual chamber R4 are formed. The first individual chamber R1 and the second individual chamber R2 among the chambers are in communication with each other through a second two-way communication channel 121. Apart from this, the bypass channel 108 is a channel allowing the fluid 123 to flow in both directions by bringing the both individual chambers into communication with each other.

Further, the adjusting needle 109 is a component for adjusting a flow rate of the fluid 123 flowing through the bypass channel 108. An amount of flow of the fluid 123 can be increased or decreased by rotating the adjusting needle 109 using a tool (not shown) such as a driver. The lid body 106 is attached by four bolts 110 to an end of the housing body 102 on which the inner chamber 103 is open.

The rotor 111 is a component which is disposed in the inner chamber 103 of the housing 101, and divides the inner chamber 103 into four spaces, that is, the first individual chamber R1, the second individual chamber R2, the third individual chamber R3 and the fourth individual chamber R4. At the same time, the rotor 111 is the component for increasing or decreasing a volume of each of the first individual chamber R1, the second individual chamber R2, the third individual chamber R3 and the fourth individual chamber R4 by its rotation in the inner chamber 103. The rotor 111 mainly includes a shaft body 112 and movable vanes 118a and 118b.

The shaft body 112 is a portion which supports the movable vanes 118a and 118b. The shaft body 112 is made of the aluminum material, the iron material, or the zinc material. A connecting portion 113 is formed at one end of the shaft body 112. At the same time, an accumulator 114 is provided at the other end of the shaft body 112. The connecting portion 113 is a portion for connecting to one of two components to which the rotary damper 100 is attached. In the present embodiment, the connecting portion 113 is constituted by a bottomed cylindrical hole having a hexagonal cross-sectional shape.

The accumulator 114 is a device for compensating for a volume change of the fluid 123 due to expansion or compression of the fluid 123 in the inner chamber 103 due to temperature change. Specifically, the accumulator 114 mainly includes a cylinder 114a, a piston 114b, a compressed gas 114c, and a gas valve body 114d. The cylinder 114a is a portion which accommodates the fluid 123, the piston 114b, and the compressed gas 114c. The cylinder 114a communicates with a first one-way communication channel 116 at the other end of the shaft body 112. In this state, the cylinder 114a is formed in a cylindrical shape.

The piston 114b is a cylindrical component which reciprocally slides in the cylinder 114a while dividing the cylinder 114a in a liquid-tight and airtight manner. The compressed gas 114c is a medium which is compressed or expanded in response to expansion or compression of the fluid 123. The compressed gas 114c is made of an inert gas such as nitrogen gas in the present embodiment. The gas valve body 114d is a component for injecting the compressed gas 114c into the cylinder 114a while sealing the cylinder 114a in an airtight manner. The gas valve body 114d is airtightly fitted into the other end of the shaft body 112. That is, the accumulator 114 is integrally assembled in the shaft body 112.

Further, the shaft body 112 is formed with a first two-way communication channel 115 and a first one-way communication channel 116. The first two-way communication channel 115 is a channel allowing the fluid 123 to mutually flow between two individual chambers having a volume simultaneously decreased by rotation of the movable vanes 118a and 118b in one direction and the volume simultaneously increased by the rotation of the movable vanes 118a and 118b in the other direction. In the present embodiment, the first two-way communication channel 115 penetrates the shaft body 112 so that the first individual chamber R1 and the third individual chamber R3 having the volume simultaneously decreased by illustrated counterclockwise rotation of the movable vanes 118a and 118b and the volume simultaneously increased by illustrated clockwise rotation of the movable vanes 118a and 118b communicate with each other. The first two-way communication channel 115 is formed in this state.

The first one-way communication channel 116 is a channel allowing the fluid 123 to flow only from one to the other between two individual chambers having the volume simultaneously increased by the rotation of the movable vanes 118a and 118b in the one direction and the volume simultaneously decreased by the rotation of the movable vanes 118a and 118b in the other direction. In the present embodiment, the first one-way communication channel 116 penetrates the shaft body 112 through a one-way valve 117 so that the second individual chamber R2 and the fourth individual chamber R4 having the volume simultaneously increased by the illustrated counterclockwise rotation of the movable vanes 118a and 118b and the volume simultaneously decreased by the illustrated clockwise rotation of the movable vanes 118a and 118b allow the fluid 123 to flow only from the second individual chamber R2 to the fourth individual chamber R4. The first one-way communication channel 116 is formed in this state. Further, the first one-way communication channel 116 also communicates with the cylinder 114a of the accumulator 114.

The one-way valve 117 is a valve which prevents the fluid 123 from flowing from the fourth individual chamber R4 side to the second individual chamber R2 side while allowing the fluid 123 to flow from the second individual chamber R2 side to the fourth individual chamber R4 side, in the first one-way communication channel 116 for communicating the second individual chamber R2 and the fourth individual chamber R4.

The movable vanes 118a and 118b are components for dividing the inner chamber 103 into a plurality of spaces and increasing or decreasing the volume of each space in a liquid-tight manner. Each of the movable vanes 118a and 118b is formed of a plate-like body extending in a radial direction of the shaft body 112 (inner chamber 103). In this case, the two movable vanes 118a and 118b are formed to extend in opposite directions (in other words, on an imaginary coplanar plane) via the shaft body 112. Further, the sealing material in close contact with the inner peripheral surface of the inner chamber 103 is provided at each tip end of the movable vanes 118a and 118b. As a result, the movable vanes 118a and 118b cooperate with the fixed vanes 104a and 104b to form in a liquid-tight manner the first individual chamber R1, the second individual chamber R2, the third individual chamber R3, and the fourth individual chamber R4, which are four spaces in the inner chamber 103.

More specifically, in the inner chamber 103, the first individual chamber R1 is formed by the fixed vane 104a and the movable vane 118a. The second individual chamber R2 is formed by the movable vane 118a and the fixed vane 104b. The third individual chamber R3 is formed by the fixed vane 104b and the movable vane 118b. The fourth individual chamber R4 is formed by the movable vane 118b and the fixed vane 104a. That is, the first individual chamber R1, the second individual chamber R2, the third individual chamber R3, and the fourth individual chamber R4 are formed adjacent to each other in a circumferential direction in the inner chamber 103.

The second two-way communication channel 121 and a second one-way communication channel 122 are respectively formed in the movable vanes 118a and 118b. The second two-way communication channel 121 is formed in the movable vane 118a which partitions the first individual chamber R1 and the second individual chamber R2, so that the first individual chamber R1 out of the first individual chamber R1 and the third individual chamber R3 as two communicating individual chambers communicating with each other through the first two-way communication channel 115, and the second individual chamber R2 out of the second individual chamber R2 and the fourth individual chamber R4 as two one-side communicating individual chambers communicating with each other through the first one-way communication channel 116, are in communication with each other.

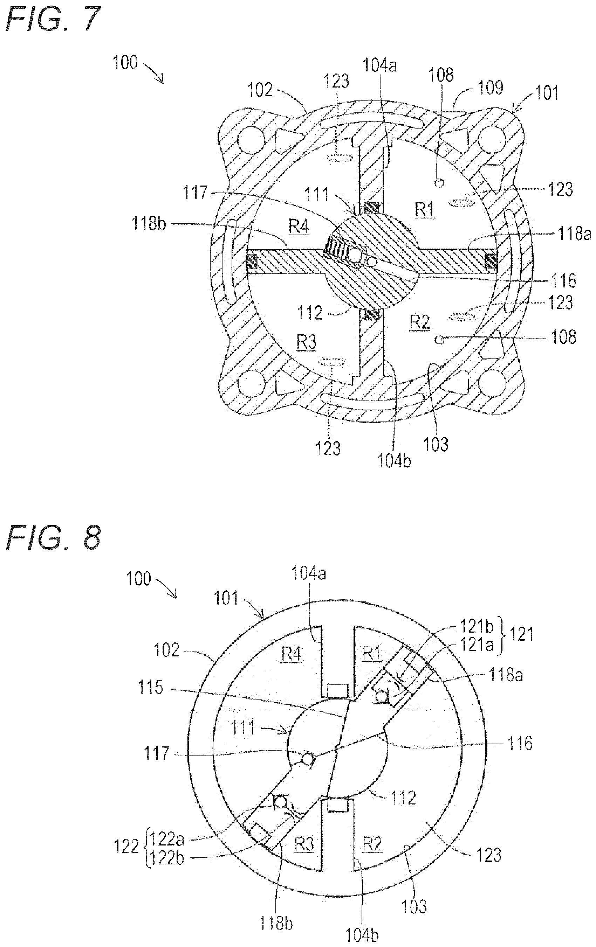

The second two-way communication channel 121 is configured to allow the fluid 123 to flow from the second individual chamber R2 which is the one-side communicating individual chamber to the first individual chamber R1 which is the communicating individual chamber, and to allow the fluid 123 to flow in a restricted manner from the first individual chamber R1 to the second individual chamber R2. Specifically, as shown in Fig. 8, the second two-way communication channel 121 is constituted by a one-way valve 121a and a throttle valve 121b arranged in parallel.

The one-way valve 121a is made of a valve which allows the fluid 123 to flow from the second individual chamber R2 side to the first individual chamber R1 side and prevents the fluid 123 from flowing from the first individual chamber R1 side to the second individual chamber R2 side. Further, the throttle valve 121b is made of a valve which can allow the fluid 123 to flow bidirectionally in a restricted manner between first individual chamber R1 and second individual chamber R2. In this case, allowing the fluid 123 to flow in a restricted manner in the throttle valve 121b means that it is difficult for the fluid 123 to flow under the same conditions (for example, pressure, viscosity of the fluid, and the like) with respect to flowability of the fluid 123 in the one-way valve 121a.

The second one-way communication channel 122 is formed in the movable vane 118b for dividing the third individual chamber R3 and the fourth individual chamber R4 so that the fluid 123 is allowed to flow in a restricted manner only from the fourth individual chamber R4 which is the one-side communicating individual chamber to the third individual chamber R3 which is the communicating individual chamber, between the third individual chamber R3 as the communicating individual chamber not communicating through the second two-way communication channel 121 and the fourth individual chamber R4 as the one-side communicating individual chamber not communicating through the second two-way communication channel 121. Specifically, the second one-way communication channel 122 is constituted by a one-way valve 122a allowing the fluid 123 to flow only from the fourth individual chamber R4 side to the third individual chamber R3 side and a throttle valve 122b restricting the flow rate of the fluid 123. The one-way valve 122a and the throttle valve 122b are arranged in series. In this case, allowing the fluid 123 to flow in a restricted manner in the throttle valve 122b means that it is difficult for the fluid 123 to flow under the same conditions (for example, pressure, viscosity of the fluid, and the like) with respect to the flowability of the fluid 123 in the one-way valve 122a.

The fluid 123 is a material for allowing the rotary damper 100 to function as a damper by applying resistance to the movable vanes 118a and 118b rotating in the inner chamber 103. The fluid 123 fills the inner chamber 103. The fluid 123 contains a fluid liquid, gel-like or semi-solid substance having a viscosity according to specifications of the rotary damper 100. In this case, the viscosity of the fluid 123 is appropriately selected according to the specifications of the rotary damper 100. In the present embodiment, the fluid 123 includes oil, for example, mineral oil or silicone oil. In Figs. 4, 6, 7, 12 and 13, only the fluid 123 in an area surrounded by a broken line circle is shown.

The rotary damper 100 thus configured is provided between two components movably connected to each other. For example, the housing 101 of the rotary damper 100 is attached to a frame, which is a basic skeleton of the two-wheeled self-propelled vehicle (not shown) as a fixed side. At the same time, the rotor 111 of the rotary damper 100 is attached to the base end of the swing arm, which supports the rear wheel of the two-wheeled self-propelled vehicle as a movable side so that it can move up and down.

### (Operation of rotary damper 100)

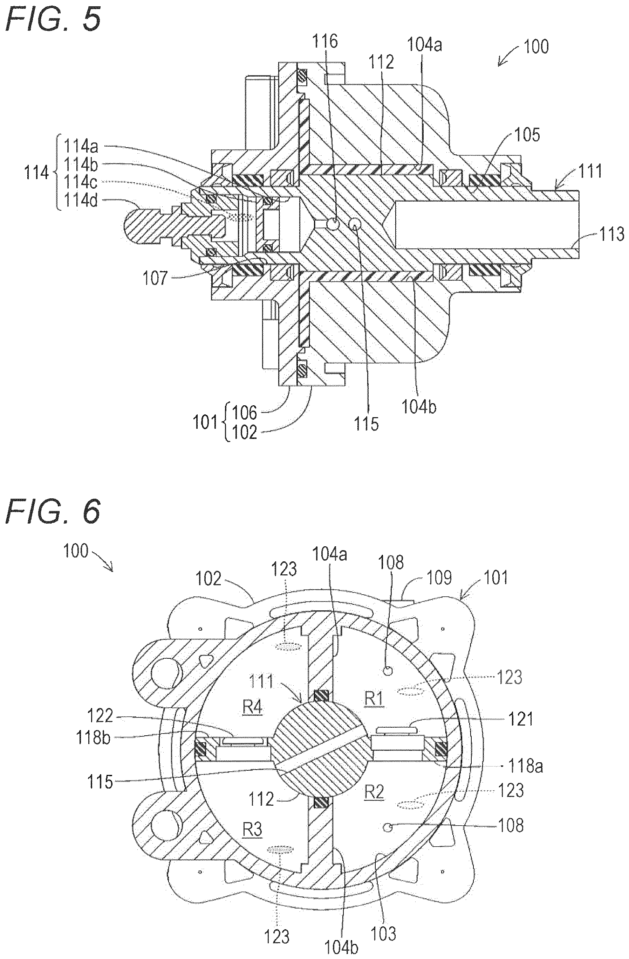

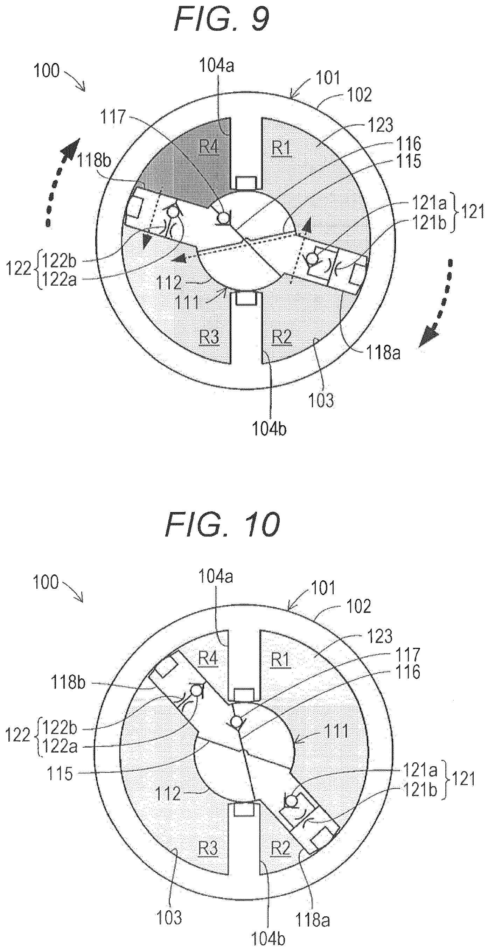

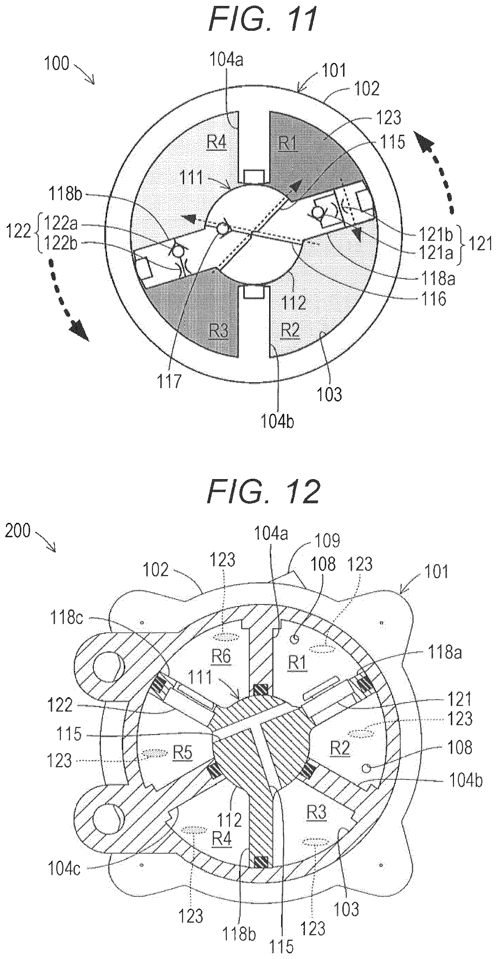

Next, an operation of the rotary damper 100 configured as described above will be described. The operation will be described with reference to Figs. 8 to 11 schematically showing the inner chamber 103 in order to facilitate understanding of movement of the rotor 111 and the fluid 123 in the inner chamber 103. Figs. 8 to 11 show Figs. 6 and 7 schematically illustrated in order to facilitate understanding of behavior of the fluid 123 with respect to movement of the movable vanes 118a and 118b. Further, in Figs. 8 to 11, a state in which the pressure of the fluid 123 is higher than that of the other individual chambers is indicated by dark hatching. On the other hand, the state in which the pressure is relatively low is indicated by light hatching. Further, in Figs. 9 and 11, a rotational direction of the movable vanes 118a and 118b is indicated by thick dashed arrows. At the same time, flow directions of the fluid 123 are indicated by thin dashed arrows.

First, as shown in Fig. 8, in a state where the swing arm of the self-propelled vehicle running on a flat land is lowered, the rotary damper 100 is in a state where the movable vane 118a is closest to the fixed vane 104a and the movable vane 118b is closest to the fixed vane 104b. That is, the rotary damper 100 is in a state where each of the first individual chamber R1 and the third individual chamber R3 has a minimum volume. At the same time, the rotary damper 100 is in a state where each of the second individual chamber R2 and the fourth individual chamber R4 has a maximum volume.

In this state, when the rear wheel of the self-propelled vehicle rides on a step or the like, the swing arm is raised. Therefore, in the rotary damper 100, the rotor 111 is rotated in an illustrated clockwise direction as shown in Fig. 9. That is, in the rotary damper 100, the movable vane 118a is rotated toward the fixed vane 104b. At the same time, the movable vane 118b is rotated toward the fixed vane 104a. Thus, in the rotary damper 100, each volume of the first individual chamber R1 and the third individual chamber R3 is increased. At the same time, each volume of the second individual chamber R2 and the fourth individual chamber R4 is decreased.

In this case, the fourth individual chamber R4 out of the second individual chamber R2 and the fourth individual chamber R4, which have had the maximum volume, is in a state of "inflow is allowed and outflow is not allowed" with respect to the second individual chamber R2 by the first one-way communication channel 116. At the same time, the fourth individual chamber R4 is in a state of "inflow is not allowed and outflow is allowed with throttle" with respect to the third individual chamber R3 by the second one-way communication channel 122. Therefore, the fluid 123 in the fourth individual chamber R4 flows out from the fourth individual chamber R4 only into the third individual chamber R3 through the throttle valve 122b. Thus, the fourth individual chamber R4 is in a high-pressure state due to an increase in pressure. Therefore, the fluid 123 does not flow into the fourth individual chamber R4 from the second individual chamber R2 communicating with the fourth individual chamber R4 through the first one-way communication channel 116.

Further, at the same time, the second individual chamber R2 is in a state of "inflow is not allowed and outflow is allowed" with respect to the fourth individual chamber R4 by the first one-way communication channel 116. At the same time, the second individual chamber R2 is in a state of "inflow is allowed with throttle and outflow is allowed" with respect to the first individual chamber R1 by the second two-way communication channel 121. In this case, the fourth individual chamber R4 is in the high-pressure state as described above. Therefore, the fluid 123 in the second individual chamber R2 flows out from the second individual chamber R2 into the first individual chamber R1 through the second two-way communication channel 121. In this case, the fluid 123 smoothly flows through the one-way valve 121a in the second two-way communication channel 121. Therefore, the second individual chamber R2 maintains a non-high-pressure state in which a rise in pressure is suppressed. Here, the non-high-pressure state is a state relative to the pressure of the other individual chambers.

On the other hand, the third individual chamber R3 out of the first individual chamber R1 and the third individual chamber R3, which have had the minimum volume, is in a state of "inflow is allowed and outflow is allowed" with respect to the first individual chamber R1 by the first two-way communication channel 115. At the same time, the third individual chamber R3 is in a state of "inflow is allowed with throttle and outflow is not allowed" with respect to the fourth individual chamber R4 by the second one-way communication channel 122. Therefore, the fluid 123 flows into the third individual chamber R3 from the first individual chamber R1 and the fourth individual chamber R4 through the throttle valve 122b. Therefore, the third individual chamber R3 maintains the non-high-pressure state.

At the same time, the first individual chamber R1 is in the state of "inflow is allowed and outflow is allowed" with respect to the third individual chamber R3 by the first two-way communication channel 115. At the same time, the first individual chamber R1 is in a state of "inflow is allowed and outflow is allowed with throttle" with respect to the second individual chamber R2 by the second two-way communication channel 121. Therefore, the fluid 123 flows from the second individual chamber R2 into the first individual chamber R1. At the same time, the fluid 123 flows out from the first individual chamber R1 to the third individual chamber R3. Therefore, the first individual chamber R1 maintains the non-high-pressure state.

That is, when the rotor 111 is rotated in the illustrated clockwise direction, in the rotary damper 100, only the fourth individual chamber R4 is in the high-pressure state due to restriction of the outflow of the fluid 123. Therefore, a damping force is smaller than the damping force at the time of the illustrated counterclockwise rotation described below. Thereafter, as shown in Fig. 10, the rotary damper 100 is in a state where the movable vane 118a is closest to the fixed vane 104b. At the same time, the rotary damper 100 is in a state where the movable vane 118b is closest to the fixed vane 104a. That is, the rotary damper 100 is in a state where each volume of the first individual chamber R1 and the third individual chamber R3 is the maximum. At the same time, the rotary damper 100 is in a state where each volume of the second individual chamber R2 and the fourth individual chamber R4 is the minimum. In this state, the swing arm of the self-propelled vehicle is in a raised state.

Next, as shown in Fig. 11, in the rotary damper 100, when the swing arm is lowered, the rotor 111 is rotated in the illustrated counterclockwise direction. That is, in the rotary damper 100, the movable vane 118a is rotated toward the fixed vane 104a. At the same time, the movable vane 118b is rotated toward the fixed vane 104b. Thus, in the rotary damper 100, each volume of the first individual chamber R1 and the third individual chamber R3 is decreased. At the same time, each volume of the second individual chamber R2 and fourth individual chamber R4 is increased.

In this case, the first individual chamber R1 out of the first individual chamber R1 and the third individual chamber R3, which have had the largest volume, is in the state of "inflow is allowed and outflow is allowed" with respect to the third individual chamber R3 by the first two-way communication channel 115. At the same time, the first individual chamber R1 is in the state of "inflow is allowed and outflow is allowed with throttle" with respect to the second individual chamber R2 by the second two-way communication channel 121. Further, in this case, the volume of the third individual chamber R3 is decreasing together with the volume of the first individual chamber R1 due to the rotation of the movable vane 118b. Therefore, the fluid 123 in the first individual chamber R1 flows out from the first individual chamber R1 only into the second individual chamber R2 through the throttle. Thus, the pressure of the first individual chamber R1 is increased. And the first individual chamber R1 is in the high-pressure state.

At the same time, the third individual chamber R3 is in the state of "inflow is allowed and outflow is allowed" with respect to the first individual chamber R1 by the first two-way communication channel 115. At the same time, the third individual chamber R3 is in the state of "inflow is allowed with throttle and outflow is not allowed" with respect to the fourth individual chamber R4 by the second one-way communication channel 122. Therefore, the fluid 123 in the third individual chamber R3 flows out from the third individual chamber R3 only into the first individual chamber R1. Thus, the pressure of the third individual chamber R3 is increased with the pressure of the first individual chamber R1. And the third individual chamber R3 is in the high-pressure state.

On the other hand, the second individual chamber R2 out of the second individual chamber R2 and the fourth individual chamber R4, which have had the minimum volume, is in the state of "inflow is allowed with throttle and outflow is allowed" with respect to the first individual chamber R1 by the second two-way communication channel 121. At the same time, the second individual chamber R2 is in the state of "inflow is not allowed and outflow is allowed" with respect to the fourth individual chamber R4 by the first one-way communication channel 116. Therefore, the fluid 123 flows from the first individual chamber R1 into the second individual chamber R2 through the throttle. At the same time, the fluid 123 flows out from the second individual chamber R2 to the fourth individual chamber R4. Therefore, the second individual chamber R2 maintains the non-high-pressure state. That is, the second individual chamber R2 constantly maintains the non-high-pressure state regardless of the rotational direction of the movable vanes 118a and 118b.

Further, at the same time, the fourth individual chamber R4 is in the state of "inflow is allowed and outflow is not allowed" with respect to the second individual chamber R2 by the first one-way communication channel 116. At the same time, the fourth individual chamber R4 is in the state of "inflow is not allowed and outflow is allowed with throttle" with respect to the third individual chamber R3 by the second one-way communication channel 122. Therefore, the fluid 123 flows only from the second individual chamber R2 into the fourth individual chamber R4. Therefore, the fourth individual chamber R4 maintains the non-high-pressure state.

That is, when the rotor 111 is rotated in the illustrated counterclockwise direction, in the rotary damper 100, each of the first individual chamber R1 and the third individual chamber R3 is in the high-pressure state due to the restriction of the outflow of the fluid 123. Therefore, the damping force is larger than the damping force at the time of the illustrated clockwise rotation described above. In this case, since there are twice as many individual chambers in the high-pressure state as compared with at the time of the illustrated clockwise rotation described above, the damping force of the rotary damper 100 is also doubled.

Thereafter, as shown in Fig. 8, in the rotary damper 100, the movable vane 118a comes closest to the fixed vane 104a. At the same time, the movable vane 118b comes closest to the fixed vane 104b. And the rotary damper 100 returns to the state in which each volume of the first individual chamber R1 and the third individual chamber R3 is the minimum. At the same time, the rotary damper 100 returns to the state in which each volume of the second individual chamber R2 and the fourth individual chamber R4 is the maximum.

In the above operation description, in order to facilitate understanding of an operating state of the rotary damper 100, it has been described that the movable vanes 118a and 118b rotate from the state in which the movable vane 118a is closest to the fixed vane 104a and the movable vane 118b is closest to the fixed vane 104b or from the state in which the vane 118a is closest to the fixed vane 104b and the movable vane 118b is closest to the fixed vane 104a. However, in the rotary damper 100, it is of course possible that the movable vanes 118a and 118b rotate to the fixed vane 104a side or the fixed vane 104b side from a state in which they are located halfway between the fixed vane 104a and the fixed vane 104b.

As can be understood from the above description of operation method, according to the above embodiment, in the rotary damper 100, the first individual chamber R1, the second individual chamber R2, the third individual chamber R3 and the fourth individual chamber R4 constituting one inner chamber 103 are respectively communicated to each other through the first two-way communication channel 115, the first one-way communication channel 116, the second two-way communication channel 121, and the second one-way communication channel 122, and thus the number of individual chambers in which the pressure is increased differs between when the rotor 111 is rotated in the one direction (illustrated clockwise direction) and when the rotor 111 is rotated in the other direction (illustrated counterclockwise direction). Therefore, it is possible to miniaturize, simplify, and reduce weight of a device structure of the rotary damper 100 having different damping forces between when the rotor 111 is rotated in the one direction and when the rotor 111 is rotated in the other direction.

Furthermore, implementation of the present invention is not limited to the above embodiment. Various modifications are possible without departing from the object of the present invention. Note that, in each modification shown below, the same components as those in the above-described embodiments are denoted by the same reference numerals. And the description will be omitted.

For example, in the above embodiment, in the rotary damper 100, one inner chamber 103 is divided into four individual chambers of the first individual chamber R1, the second individual chamber R2, the third individual chamber R3 and the fourth individual chamber R4 by the fixed vanes 104a and 104b and the movable vanes 118a and 118b. However, it is sufficient that the rotary damper 100 has at least two individual chambers having the volume simultaneously decreased by the rotation of the movable vanes 118a and 118b in the one direction and the volume simultaneously increased by the rotation of the movable vanes 118a and 118b to the other direction, and at least two individual chambers having the volume simultaneously increased by the rotation of the movable vanes 118a and 118b to the one direction and the volume simultaneously decreased by the rotation of the movable vanes 118a and 118b to the other direction. That is, it is sufficient that the rotary damper 100 has in one inner chamber 103 at least two individual chambers having the volume simultaneously increased and at least two individual chambers having the volume simultaneously decreased separately from the former individual chambers at the rotation to one direction of the rotor 111.

Therefore, for example, as shown in Figs. 12 to 15, a rotary damper 200 can include three fixed vanes 104a, 104b, 104c and three movable vanes 118a, 118b, 118c, which are respectively arranged evenly spaced. Thus, the rotary damper 200 can be configured such that the one inner chamber 103 is divided into six individual chambers of the first individual chamber R1, the second individual chamber R2, the third individual chamber R3, the fourth individual chamber R4, a fifth individual chamber R5, and a sixth individual chamber R6.

In this case, the first two-way communication channel 115 can be provided in the shaft body 112 in communication with the first individual chamber R1, the third individual chamber R3, and the fifth individual chamber R5. Further, the first one-way communication channel 116 can be configured such that the fourth individual chamber R4 and the sixth individual chamber R6 communicate with each other, and the one-way valve 117 is disposed in such a direction that the fluid 123 flows only from the second individual chamber R2 to the fourth individual chamber R4 and the sixth individual chamber R6.

Further, the second two-way communication channel 121 can be provided in the movable vane 118a which partitions the first individual chamber R1 and the second individual chamber R2. Further, the second one-way communication channel 122 can be provided in the movable vane 118c which partitions the fifth individual chamber R5 and the sixth individual chamber R6.

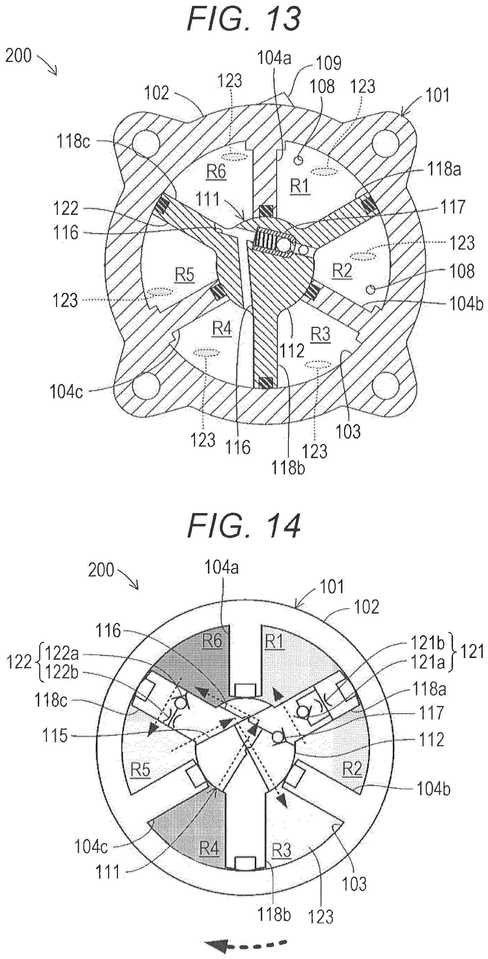

In the rotary damper 200 thus configured, as shown in Fig. 14, in a state where the movable vane 118a is closest to the fixed vane 104a, the movable vane 118b is closest to the fixed vane 104b, and the movable vane 118c is closest to the fixed vane 104c, when the rotor 111 is rotated in the illustrated clockwise direction, the two fourth individual chamber R4 and sixth individual chamber R6 are in the high-pressure state.

That is, from the sixth individual chamber R6 out of the second individual chamber R2, the fourth individual chamber R4 and the sixth individual chamber R6, which have had the maximum volume, the fluid 123 in the sixth individual chamber R6 flows out only into the fifth individual chamber R5 through the throttle by the first one-way communication channel 116 and the second one-way communication channel 122. And the sixth individual chamber R6 is in the high-pressure state. Further, at the same time, the fourth individual chamber R4 integrally communicates with the sixth individual chamber R6 through the first one-way communication channel 116. Therefore, the fluid in the fourth individual chamber R4 flows into the sixth individual chamber R6. Therefore, the fourth individual chamber R4 is in the high-pressure state together with the sixth individual chamber R6. At the same time, the fluid 123 in the second individual chamber R2 flows out only into the first individual chamber R1 through the second two-way communication channel 121. Therefore, the second individual chamber R2 maintains the non-high-pressure state.

On the other hand, to the fifth individual chamber R5 out of the first individual chamber R1, the third individual chamber R3 and the fifth individual chamber R5, which have had the minimum volume, the fluid 123 flows in from the fourth individual chamber R4 and the sixth individual chamber R6 through the second one-way communication channel 122. At the same time, the fluid 123 flows out from the fifth individual chamber R5 to the third individual chamber R3 through the first two-way communication channel 115. Therefore, the fifth individual chamber R5 maintains the non-high-pressure state. At the same time, the fluid 123 flows from the second individual chamber R2 into the first individual chamber R1 through the second two-way communication channel 121. Therefore, the first individual chamber R1 maintains the non-high-pressure state. At the same time, the fluid 123 flows from the fifth individual chamber R5 into the third individual chamber R3 through the first two-way communication channel 115. Therefore, the third individual chamber R3 maintains the non-high-pressure state.

That is, when the rotor 111 is rotated in the illustrated clockwise direction, in the rotary damper 200, each of the fourth individual chamber R4 and the sixth individual chamber R6 is in the high-pressure state due to the restriction of the outflow of the fluid 123. Therefore, the damping force is smaller than the damping force at the time of the illustrated counterclockwise rotation described below.

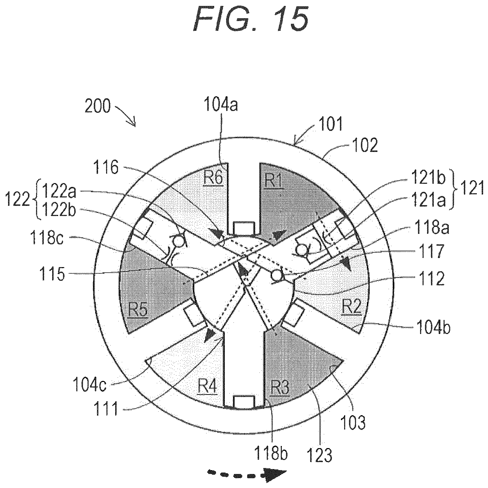

Next, in the rotary damper 200, as shown in Fig. 15, in a state where the movable vane 118a is closest to the fixed vane 104b, the movable vane 118b is closest to the fixed vane 104c, and the movable vane 118c is closest to the fixed vane 104a, when the rotor 111 is rotated in the illustrated counterclockwise direction, the three first individual chamber R1, third individual chamber R3 and fifth individual chamber R5 are in the high-pressure state.

That is, the first individual chamber R1 and the third individual chamber R3 out of the first individual chamber R1, the third individual chamber R3 and the fifth individual chamber R5, which have had the maximum volume, integrally communicates with each other through the first two-way communication channel 115. At the same time, the fluid 123 in the first individual chamber R1 flows out only into the second individual chamber R2 through the throttle by the second two-way communication channel 121. In this case, the fluid in the third individual chamber R3 flows to the first individual chamber R1 through the first two-way communication channel 115. Thus, each of the first individual chamber R1 and the third individual chamber R3 is in the high-pressure state due to pressure increase. At the same time, the fluid 123 in the fifth individual chamber R5 flows out only into the first individual chamber R1 through the first two-way communication channel 115 and the second one-way communication channel 122. As a result, the fifth individual chamber R5 is in the high-pressure state due to the pressure increase together with the first individual chamber R1 and the third individual chamber R3.

On the other hand, to the second individual chamber R2 out of the second individual chamber R2, the fourth individual chamber R4, and the sixth individual chamber R6, which have had the minimum volume, the fluid 123 flows in from the first individual chamber R1 through the throttle by the second two-way communication channel 121. At the same time, the fluid 123 flows out from the second individual chamber R2 to the fourth individual chamber R4 and the sixth individual chamber R6 through the first one-way communication channel 116. Therefore, the second individual chamber R2 maintains the non-high-pressure state. At the same time, the fluid 123 flows from the second individual chamber R2 into the fourth individual chamber R4 through the first one-way communication channel 116. Therefore, the fourth individual chamber R4 maintains the non-high-pressure state.

That is, the second individual chamber R2 constantly maintains the non-high-pressure state regardless of the rotational direction of the movable vanes 118a and 118b. At the same time, the fluid 123 flows from the second individual chamber R2 into the sixth individual chamber R6 through the first one-way communication channel 116. Therefore, the second individual chamber R2 maintains the non-high-pressure state.

That is, when the rotor 111 is rotated in the illustrated counterclockwise direction, each of the first individual chamber R1, the third individual chamber R3 and the fifth individual chamber R5 of the rotary damper 200 is in the high-pressure state due to the restriction of the outflow of the fluid 123. Therefore, the damping force is larger than the damping force at the time of the illustrated clockwise rotation described above. In this case, there are 1.5 times as many individual chambers in the high-pressure state as compared with at the time of the illustrated clockwise rotation described above. Therefore, the damping force of the rotary damper 200 is also increased 1.5 times. Note that, in Figs. 14 and 15, the state in which the pressure of the fluid 123 is higher than that of the other individual chambers is indicated by the dark hatching. The state in which the pressure is relatively low is indicated by the light hatching. Further, in Figs. 14 and 15, the rotational direction of the movable vanes 118a, 118b and 118c is indicated by the thick dashed arrow. At the same time, the flow directions of the fluid 123 are indicated by the thin dashed arrows.

Further, in the rotary damper 200 in the above modification, the first one-way communication channel 116 is configured such that the fourth individual chamber R4 and the sixth individual chamber R6 communicate with each other, and the one-way valve 117 is disposed in such a direction that the fluid 123 flows only from the second individual chamber R2 to the fourth individual chamber R4 and the sixth individual chamber R6. However, it is sufficient that the first one-way communication channel 116 allows the fluid 123 to flow one individual chamber to the other individual chamber out of at least two individual chambers having the volume simultaneously increased or decreased by rotation of the rotor 111.

Therefore, as in the case of the rotary damper 200 in the above modification, when there are three individual chambers having the volumes simultaneously increased or decreased due to the rotation of the rotor 111, for example, the first one-way communication channel 116 can be configured as follows. In this configuration, the one-way valve 117 is disposed in such a direction that the second individual chamber R2 and the fourth individual chamber R4 communicate with each other, and the fluid 123 flows only to the sixth individual chamber R6 from the second individual chamber R2 and the fourth individual chamber R4. With this configuration, in the rotary damper 200, when the rotor 111 is rotated in the illustrated clockwise direction, only the sixth individual chamber R6 can be in the high-pressure state. As a result, the damping force of the rotary damper 200 can be reduced to half of that of the above modification. Note that the first one-way communication channel 116 can be provided or disposed in the same manner even in the case where there are four or more individual chambers having the volume simultaneously increased or decreased due to the rotation of the rotor 111.

Further, in the above modification, the 2nd two-way communication channel 121 is provided in the movable vane 118a which partitions the first individual chamber R1 and the second individual chamber R2. However, it is sufficient that the second two-way communication channel 121 is provided such that the fluid 123 flows from the one-side communicating individual chamber side to the communicating individual chamber side between at least one of the communicating individual chambers and at least one of the one-side communicating individual chambers, and the fluid 123 flows in a restricted manner from the communicating individual chamber side to the one-side communicating individual chamber side. Here, the communicating individual chambers are at least two individual chambers communicating with each other through the first two-way communication channel 115. Further, the one-side communicating individual chamber is at least two individual chambers communicating with each other through the first one-way communication channel 116.

Therefore, as in the case of the rotary damper 200 in the above modification, when there are three individual chambers having the volumes simultaneously increased or decreased due to the rotation of the rotor 111, for example, the second two-way communication channel 121 can also be provided in the movable vane 118b together with in the movable vane 118a. In this case, the damping force of the rotary damper 200 is smaller than that of the above modification. However, the flow of the fluid 123 is reduced between the third individual chamber R3, the fourth individual chamber R4 and the first individual chamber R1, the second individual chamber R2. Therefore, a burden of first individual chamber R1 and second individual chamber R2 can be reduced. Note that the second two-way communication channel 121 can be provided or disposed in the same manner even in the case where there are four or more individual chambers having the volume simultaneously increased or decreased due to the rotation of the rotor 111.

Further, in the above modification, the second one-way communication channel 122 is provided in the movable vane 118c which partitions the fifth individual chamber R5 and the sixth individual chamber R6. However, it is sufficient that the second one-way communication channel 122 is provided such that the fluid 123 flows in a restricted manner from the communicating individual chamber side to the one-side communicating individual chamber side between at least one of the communicating individual chambers not communicated through the second two-way communication channel 121 and at least one of the one-side communicating individual chambers not communicated through the second two-way communication channel 121.

Therefore, as in the case of the rotary damper 200 in the above modification, when there are three individual chambers having the volumes simultaneously increased or decreased due to the rotation of the rotor 111, for example, the second one-way communication channel 122 can also be provided in the movable vane 118b together with the movable vane 118c. In this case, the damping force of the rotary damper 200 is smaller than that of the above modification. However, the first one-way communication channel 116 can be configured such that the fourth individual chamber R4 and the sixth individual chamber R6 communicate with each other, and the one-way valve 117 is disposed in such a direction that the fluid 123 flows only from the second individual chamber R2 side to the fourth individual chamber R4 and the sixth individual chamber R6. Thus, the behavior of the fourth individual chamber R4 and the behavior of the sixth individual chamber R6 can be made equal.

That is, in the rotary damper 200 thus configured, when the rotor 111 is rotated in the illustrated clockwise direction, the fourth individual chamber R4 can also be in the high-pressure state in addition to the sixth individual chamber R6. Note that the second one-way communication channel 122 can be provided or disposed in the same manner even in the case where there are four or more individual chambers having the volumes simultaneously increased or decreased due to the rotation of the rotor 111.

Further, in the above embodiment and the above modification, each of the first two-way communication channel 115 and the first one-way communication channel 116 is provided in the shaft body 112 of the rotor 111. At the same time, the second two-way communication channel 121 and the second one-way communication channel 122 are respectively provided in the movable vanes 118a and 118b or the movable vanes 118a and 118c. However, the first two-way communication channel 115 and the first one-way communication channel 116 can be provided at a location other than the shaft body 112 of the rotor 111. At the same time, the second two-way communication channel 121 and the second one-way communication channel 122 can be provided at a location other than the movable vanes 118a, 118b, and 118c.

Therefore, the first two-way communication channel 115, the first one-way communication channel 116, the second two-way communication channel 121, and the second one-way communication channel 122 can be, for example, constituted by internal piping or external piping communicated between the individual chambers of the first individual chamber R1, the second individual chamber R2, the third individual chamber R3, the fourth individual chamber R4, the fifth individual chamber R5, and the sixth individual chamber R6, inside an outer wall portion of the housing 101 or in a state of exposed to an outside of the outer wall portion. Further, the second two-way communication channel 121 and the second one-way communication channel 122 can also be formed inside the shaft body 112 or in the fixed vanes 104a, 104b and 104c.

Further, in the above embodiments, the rotary dampers 100 and 200 are configured by providing the accumulator 114 on the shaft body 112 of the rotor 111. Thus, the rotary dampers 100 and 200 can compensate for the volume change due to expansion or compression based on the temperature change of the fluid 123. At the same time, the structure of the rotary dampers 100 and 200 can be miniaturized. However, the accumulator 114 can also be provided at a location other than the rotor 111, for example, outside the housing 101.

Further, in the case where it is not necessary to consider the volume change of the fluid 123, the rotary damper 100 can be configured without the accumulator 114. Note that, in the case where the accumulator 114 is provided in the rotary damper 100, it is necessary to provide the accumulator 114 so as to communicate with the individual chamber (the second individual chamber R2 in the above embodiment, and the second individual chamber R2 in the above modification), which is constantly not in the high-pressure state but in the non-high-pressure state, out of the first individual chamber R1, the second individual chamber R2, the third individual chamber R3, the fourth individual chamber R4, the fifth individual chamber R5 and the sixth individual chamber R6. The accumulator 114 can also be made of a spring type of elastically pushing the piston 114b with a spring, in addition to a gas type using the compressed gas 114c.

Further, in the above embodiment, the rotary damper 100 is configured such that the first individual chamber R1 and the second individual chamber R2 communicate with each other through the bypass channel 108 including the adjusting needle 109 separately from the second two-way communication channel 121. Thus, the damping force of the rotary damper 100 at the time of the illustrated counterclockwise rotation can be adjusted by increasing or decreasing the flow rate of the fluid 123 in the bypass channel 108 through an operation of the adjusting needle 109.

However, it is sufficient that the bypass channel 108 is formed such that, among the at least four individual chambers formed in the inner chamber 103, the individual chamber which is constantly not in the high-pressure state with respect to the other individual chambers regardless of the rotational direction of the movable vanes 118a and 118b, and the individual chamber which can be in the high-pressure state with respect to the individual chamber which is constantly not in the high-pressure state by the rotation of the movable vanes 118a and 118b communicate to each other so that a limited amount of the fluid 123 can be adjusted.

That is, in the rotary damper 100 in the above embodiment, the second individual chamber R2 is the individual chamber which is constantly not in the high-pressure state with respect to the first individual chamber R1, the third individual chamber R3 and the fourth individual chamber R4, which are the other individual chambers, regardless of the rotational direction of the movable vanes 118a and 118b. The first individual chamber R1, the third individual chamber R3, and the fourth individual chamber R4 are the individual chambers which can be in the high-pressure state with respect to the second individual chamber R2, which is constantly not in the high-pressure state, by the rotation of the movable vanes 118a and 118b. Therefore, in the rotary damper 100 in the above embodiment, it is possible to adjust the damping force at the time of the illustrated clockwise rotation, for example, by providing the bypass channel 108 between the second individual chamber R2 and the fourth individual chamber R4.

Further, in the rotary damper 200 in the above modification, the second individual chamber R2 is the individual chamber which is constantly not in the high-pressure state with respect to the first individual chamber R1, the third individual chamber R3, the fourth individual chamber R4, the fifth individual chamber R5, and the sixth individual chamber R6, which are the other individual chambers, regardless of the rotational direction of the movable vanes 118a, 118b and 118c. The first individual chamber R1, the third individual chamber R3, the fourth individual chamber R4, the fifth individual chamber R5, and the sixth individual chamber R6 are the individual chambers which can be in the high-pressure state with respect to the second individual chamber R2, which is constantly not in the high-pressure state, by the rotation of the movable vanes 118a, 118b and 118c.

Therefore, in the rotary damper 200 in the above modification, it is possible to adjust the damping force at the time of the illustrated counterclockwise rotation by providing the bypass channel 108 between the second individual chamber R2 and at least one of the first individual chamber R1, the third individual chamber R3 and the fifth individual chamber R5. At the same time, it is possible to adjust the damping force at the time of the illustrated clockwise rotation by providing the bypass channel 108 between the second individual chamber R2 and at least one of the fourth individual chamber R4 and the sixth individual chamber R6. Note that it is possible to miniaturize the structure of the rotary dampers 100 and 200 by providing the bypass channel 108 at any position of the housing 101, more preferably in the lid body 106.

In the above embodiment and the above modification, in the rotary dampers 100 and 200, the housing 101 is on the fixed side, and the rotor 111 is on the movable side. However, the rotation of the rotor 111 with respect to the housing 101 of the rotary dampers 100 and 200 is relative. Therefore, in the rotary dampers 100 and 200, of course, the housing 101 may be on the movable side and the rotor 111 may be on the fixed side.

Further, in the above embodiments, the case where the rotary damper 100 is attached to the swing arm of the two-wheeled self-propelled vehicle has been described. However, the rotary damper 100 can be used attached to a location other than the swing arm in the two-wheeled self-propelled vehicle (for example, an opening and closing mechanism of a seat), a vehicle other than the two-wheeled self-propelled vehicle (a suspension mechanism, a seat mechanism, or an opening and closing door in a four-wheeled self-propelled vehicle), a mechanical device other than self-propelled vehicles, an electrical device or an instrument.

### LIST OF REFERENCE NUMERALS

R1: First individual chamber, R2: Second individual chamber, R3: Third individual chamber, R4: Fourth individual chamber, R5: Fifth individual chamber, R6: Sixth individual chamber,
100, 200: Rotary damper, 101: Housing, 102: Housing body, 103: Inner chamber, 104a to 104c: Fixed vane, 105: Rotor support portion, 106: Lid body, 107: Rotor support portion, 108: Bypass channel, 109: Adjusting needle,
110: Bolt, 111: Rotor, 112: Shaft body, 113: Connecting portion, 114: Accumulator, 114a: Cylinder, 114b: Piston, 114c: Compressed gas, 114d: Gas valve body, 115: First two-way communication channel, 116: First one-way communication channel, 117: One-way valve, 118a to 118c: Movable vane
121: Second two-way communication channel, 121a: One-way valve, 121b: Throttle valve, 122: Second one-way communication channel, 122a: One-way valve, 122b: Throttle valve, 123; Fluid.

## Claims

1. A rotary damper (100, 200) comprising:
a housing (101) having a cylindrical inner chamber (103) containing a fluid (123) in a liquid-tight manner and fixed vanes (104a to 104c) formed in a wall shape in a radial direction in the inner chamber (103) to prevent circumferential flow of the fluid (123);
a rotor (111) having movable vanes (118a to 118c) rotating while dividing the inner chamber (103) and pushing the fluid (123), on an outer peripheral portion of a shaft body (112) thereof; and
at least four individual chambers (R1 to R6) formed by the fixed vanes (104a to 104c) and the movable vanes (118a to 118c) in the inner chamber (103) and having a volume increased or decreased depending on a rotational direction of the movable vanes (118a to 118c), wherein
the rotary damper (100, 200) further comprises:
a first two-way communication channel (115) allowing the fluid (123) to mutually flow between at least two of the individual chambers (R1 to R6) having the volume simultaneously decreased by rotation of the movable vanes (118a to 118c) to one direction and the volume simultaneously increased by the rotation of the movable vanes (118a to 118c) to the other direction;
a first one-way communication channel (116) allowing the fluid (123) to flow only from one direction to the other direction between at least two of the individual chambers (R1 to R6) having the volume simultaneously increased by the rotation of the movable vanes (118a to 118c) to the one direction and the volume simultaneously decreased by the rotation of the movable vanes (118a to 118c) to the other direction;
a second two-way communication channel (121) allowing the fluid (123) to flow from the one-side communicating individual chamber side to the communicating individual chamber side, and allowing the fluid (123) to flow in a restricted manner from the communicating individual chamber side to the one-side communicating individual chamber side, between at least one of communicating individual chambers (R1 to R6) which are at least two individual chambers (R1 to R6) communicated through the first two-way communication channel (115) and at least one of one-side communicating individual chambers (R1 to R6) which are at least two individual chambers (R1 to R6) communicated through the first one-way communication channel (116); and
a second one-way communication channel (122) allowing the fluid (123) to flow in a restricted manner only from the one-side communicating individual chamber (R1 to R6) side to the communicating individual chamber (R1 to R6) side between at least one of the communicating individual chambers (R1 to R6) not communicated through the second two-way communication channel (121) and at least one of the one-side communicating individual chambers (R1 to R6) not communicated through the second two-way communication channel (121).

2. The rotary damper (100, 200) according to claim 1, wherein each of the first two-way communication channel (115) and the first one-way communication channel (116) is formed in the shaft body (112) of the rotor (111).

3. The rotary damper (100, 200) according to claim 1 or 2, wherein each of the second two-way communication channel (121) and the second one-way communication channel (122) is formed in the movable vane (118a to 118c) of the rotor (111).

4. The rotary damper (100, 200) according to any one of claims 1 to 3, further comprising an accumulator (114) which communicates with the one-side communicating individual chamber (R1 to R6) communicating with the second two-way communication channel (121), and absorbs a volume change due to expansion or compression of the fluid (123).

5. The rotary damper (100, 200) according to any one of claims 1 to 4, further comprising a bypass channel (108) adjustably communicating a limited amount of the fluid (123) between an individual chamber (R1 to R6) which is constantly not in a high-pressure state with respect to other individual chambers (R1 to R6) regardless of the rotational direction of the movable vane (118a to 118c) among the at least four individual chambers (R1 to R6) formed in the inner chamber (103), and an individual chamber (R1 to R6) which can be in a high-pressure state by the rotation of the movable vane (118a to 118c) with respect to the individual chamber (R1 to R6) which is constantly not in a high-pressure state.

## Patentansprüche

1. Ein Drehdämpfer (100, 200), der folgende Merkmale aufweist:
ein Gehäuse (101) mit einer zylindrischen Innenkammer (103), die ein Fluid (123) auf fluiddichte Weise enthält, und festen Schaufeln (104a bis 104c), die in einer Wandform in einer Radialrichtung in der Innenkammer (103) gebildet sind, um eine Umfangsströmung des Fluids (123) zu verhindern;
einen Rotor (111) mit beweglichen Schaufeln (118a bis 118c), die sich drehen, während dieselben die Innenkammer (103) unterteilen und das Fluid (123) drücken, auf einem Außenumfangsabschnitt eines Wellenkörpers (112) desselben; und
zumindest vier Einzelkammern (R1 bis R6), die durch die festen Schaufeln (104a bis 104c) und die beweglichen Schaufeln (118a bis 118c) in der Innenkammer (103) gebildet sind und ein Volumen aufweisen, das in Abhängigkeit einer Drehrichtung der beweglichen Schaufeln (118a bis 118c) zunimmt oder abnimmt, wobei
der Drehdämpfer (100, 200) ferner folgende Merkmale aufweist:
einen ersten Zwei-Wege-Kommunikationskanal (115), der es ermöglicht, dass das Fluid (123) wechselseitig zwischen zwei der Einzelkammern (R1 bis R6) strömt, bei denen das Volumen gleichzeitig durch die Drehung der beweglichen Schaufeln (118a bis 118c) in einer Richtung abnimmt und das Volumen gleichzeitig durch die Drehung der beweglichen Schaufeln (118a bis 118c) in der anderen Richtung zunimmt;
einen ersten Einweg-Kommunikationskanal (116), der es ermöglicht, dass das Fluid (123) lediglich von einer Richtung zu der anderen Richtung zwischen den zumindest zwei der Einzelkammern (R1 bis R6) fließt, bei denen das Volumen gleichzeitig durch die Drehung der beweglichen Schaufeln (118a bis 118c) in der einen Richtung zunimmt und das Volumen gleichzeitig durch die Drehung der beweglichen Schaufeln (118a bis 118c) in der anderen Richtung abnimmt;
einen zweiten Zwei-Wege-Kommunikationskanal (121), der es ermöglicht, dass das Fluid (123) von der Seite der einseitigen kommunizierenden Einzelkammer zu der Seite der kommunizierenden Einzelkammer strömt, und es ermöglicht, dass das Fluid (123) auf eingeschränkte Weise von der Seite der kommunizierenden Einzelkammer zu der Seite der einseitigen kommunizierenden Einzelkammer strömt, zwischen zumindest einer von kommunizierenden Einzelkammern (R1 bis R6), die zumindest zwei Einzelkammern (R1 bis R6) sind, die durch den ersten Zwei-Wege-Kommunikationskanal (115) in Kommunikation stehen, und zumindest einer von einstigen kommunizierenden Einzelkammer (R1 bis R6), die zumindest zwei Einzelkammern (R1 bis R6) sind, die durch den ersten Einweg-Kommunikationskanal (116) in Kommunikation stehen; und
einen zweiten Einweg-Kommunikationskanal (122), der es ermöglicht, dass das Fluid (123) auf eingeschränkte Weise lediglich von der Seite der einseitigen kommunizierenden Einzelkammer (R1 bis R6) zu der Seite der kommunizierenden Einzelkammer (R1 bis R6) strömt, zwischen zumindest einer der kommunizierenden Einzelkammern (R1 bis R6), die nicht durch den zweiten Zwei-Wege-Kommunikationskanal (121) in Kommunikation stehen, und zumindest einer der einseitigen kommunizierenden Einzelkammern (R1 bis R6), die nicht durch den zweiten Zwei-Wege-Kommunikationskanal (121) in Kommunikation stehen.

2. Der Drehdämpfer (100, 200) gemäß Anspruch 1, wobei der erste Zwei-Wege-Kommunikationskanal (115) und der erste Einweg-Kommunikationskanal (116) jeweils in dem Wellenkörper (112) des Rotors (111) gebildet sind.

3. Der Drehdämpfer (100, 200) gemäß Anspruch 1 oder 2, wobei der zweite Zwei-Wege-Kommunikationskanal (121) und der zweite Einweg-Kommunikationskanal (122) jeweils in der beweglichen Schaufel (118a bis 118c) des Rotors (111) gebildet ist.

4. Der Drehdämpfer (100, 200) gemäß einem der Ansprüche 1 bis 3, der ferner einen Akkumulator (114) aufweist, der mit der einseitigen kommunizierenden Einzelkammer (R1 bis R6) kommuniziert, die mit dem zweiten Zwei-Wege-Kommunikationskanal (121) kommuniziert, und eine Volumenänderung aufgrund einer Ausdehnung oder Kompression des Fluids (123) absorbiert.

5. Der Drehdämpfer (100, 200) gemäß einem der Ansprüche 1 bis 4, der ferner einen Umgehungskanal (108) aufweist, der auf einstellbare Weise eine begrenzte Menge des Fluids (123) kommuniziert zwischen einer Einzelkammer (R1 bis R6), die in Bezug auf andere Einzelkammern (R1 bis R6) konstant nicht in einem Hochdruckzustand ist, unabhängig von der Drehrichtung des beweglichen Schaufelns (118a bis 118c), aus den zumindest vier Einzelkammern (R1 bis R6), die in der Innenkammer (103) gebildet sind, und einer Einzelkammer (R1 bis R6), die durch die Drehung der beweglichen Schaufel (118a bis 118c) in einem Hochdruckzustand in Bezug auf die Einzelkammer (R1 bis R6), die konstant nicht in einem Hochdruckzustand ist, sein kann.

## Revendications

1. Amortisseur rotatif (100, 200) comprenant:
un logement (101) présentant une chambre intérieure cylindrique (103) contenant un fluide (123) de manière étanche aux liquides et des aubes fixes (104a à 104c) formées en forme de paroi dans une direction radiale dans la chambre intérieure (103) pour empêcher le flux circonférentiel du fluide (123);
un rotor (111) présentant des aubes mobiles (118a à 118c) tournant tout en divisant la chambre intérieure (103) et en poussant le fluide (123), sur une partie périphérique extérieure d'un corps d'arbre (112) de ce dernier; et
au moins quatre chambres individuelles (R1 à R6) formées par les aubes fixes (104a à 104c) et les aubes mobiles (118a à 118c) dans la chambre intérieure (103) et présentant un volume augmenté ou diminué en fonction d'une direction de rotation des aubes mobiles (118a à 118c),
dans lequel
l'amortisseur rotatif (100, 200) comprend par ailleurs:
un premier canal de communication bidirectionnel (115) permettant au fluide (123) de circuler mutuellement entre au moins deux des chambres individuelles (R1 à R6) présentant le volume simultanément diminué par rotation des aubes mobiles (118a à 118c) dans une direction et le volume simultanément augmenté par la rotation des aubes mobiles (118a à 118c) dans l'autre direction;
un premier canal de communication unidirectionnel (116) permettant au fluide (123) de circuler uniquement d'une direction à l'autre direction entre au moins deux des chambres individuelles (R1 à R6) présentant le volume augmenté simultanément par la rotation des aubes mobiles (118a à 118c) dans l'une direction et le volume diminué simultanément par la rotation des aubes mobiles (118a à 118c) dans l'autre direction;
un deuxième canal de communication bidirectionnel (121) permettant au fluide (123) de circuler du côté de la chambre individuelle communicante d'un côté vers le côté de la chambre individuelle communicante, et permettant au fluide (123) de circuler de manière restreinte du côté de la chambre communicante vers le côté de la chambre individuelle communicante d'un côté, entre au moins l'une des chambres individuelles communicantes (R1 à R6) qui sont au moins deux chambres individuelles (R1 à R6) communiquées par le premier canal de communication bidirectionnel (115) et au moins l'une des chambres individuelles communicantes d'un côté (R1 à R6) qui sont au moins deux chambres individuelles (R1 à R6) communiquées par le premier canal de communication unidirectionnel (116); et
un deuxième canal de communication unidirectionnel (122) permettant au fluide (123) de circuler de manière restreinte uniquement du côté de l'une chambre individuelle communicante (R1 à R6) vers le côté de la chambre individuelle communicante (R1 à R6) entre au moins une des chambres individuelles communicantes (R1 à R6) non communiquées par le deuxième canal de communication bidirectionnel (121) et au moins une des chambres individuelles communicantes d'un côté (R1 à R6) non communiquées par le deuxième canal de communication bidirectionnel (121).

2. Amortisseur rotatif (100, 200) selon la revendication 1, dans lequel chacun parmi le premier canal de communication bidirectionnel (115) et le premier canal de communication unidirectionnel (116) est formé dans le corps d'arbre (112) du rotor (111).

3. Amortisseur rotatif (100, 200) selon la revendication 1 ou 2, dans lequel chacun parmi le deuxième canal de communication bidirectionnel (121) et le deuxième canal de communication unidirectionnel (122) est formé dans l'aube mobile (118a à 118c) du rotor (111).

4. Amortisseur rotatif (100, 200) selon l'une quelconque des revendications 1 à 3, comprenant par ailleurs un accumulateur (114) qui communique avec la chambre individuelle communicante d'un côté (R1 à R6) communiquant avec le deuxième canal de communication bidirectionnel (121), et absorbe un changement de volume dû à la dilatation ou à la compression du fluide (123).

5. Amortisseur rotatif (100, 200) selon l'une quelconque des revendications 1 à 4, comprenant par ailleurs un canal de contournement (108) communiquant de manière réglable une quantité limitée du fluide (123) entre une chambre individuelle (R1 à R6) qui est constamment non dans un état de haute pression par rapport à d'autres chambres individuelles (R1 à R6) quelle que soit la direction de rotation de l'aube mobile (118a à 118c) parmi les au moins quatre chambres individuelles (R1 à R6) formées dans la chambre intérieure (103), et une chambre individuelle (R1 à R6) qui peut être dans un état de haute pression par la rotation de l'aube mobile (118a à 118c) par rapport à la chambre individuelle (R1 à R6) qui est constamment non dans un état de haute pression.
